# EUROPEAN PATENT APPLICATION

(11) **EP 3 940 625 A1**
(43) Date of publication of application: **19.01.2022**
(21) Application number: 21186107.5
(22) Date of filing: 16.07.2021
(51) Int. Cl.: G06T 5/00

(54) **TARGETED AREA IMAGE ENHANCEMENT FOR AIRCRAFT CAMERA SYSTEM**

(30) Priority: 17.07.2020 US 202016931709
(71) Applicant: ROSEMOUNT AEROSPACE INC., Burnsville, MN 55306-4898 (US)
(72) Inventor: LUND, Kraig Stephen, Rosemount, 55088 (US)
(74) Representative: Dehns

(57) **Abstract**

A method of enhancing a portion of an aircraft digital video image in real time includes the steps of identifying a target area within a field of view of a camera (12), the target area including at least a portion of an aircraft structure and a shadowed region, and selecting for enhancement a predetermined pixel subset corresponding to the target area. The method further includes capturing an image using the camera, the image represented by a signal, providing the signal to a video processing box (18), formatting the image within the video processing box, and applying, using a processing device, a contrast enhancement algorithm to the predetermined pixel subset to create and enhanced image.

## Description

### BACKGROUND

The disclosed subject matter generally relates to video image enhancement, and more particularly, to a method of improving the dynamic range and contrast of a portion of a video scene using a real-time algorithmic solution.

Video cameras have many challenging image quality design requirements, particularly when designed for outdoor applications where the ambient lighting includes bright sunlight or nighttime. Such applications can impact an image's dynamic range (ratio of the darkest and lightest tones) and contrast (difference between maximum and minimum pixel intensity). Cameras designed specifically for operation of motor and aerial vehicles have additional constraints on total system latency, as an operator can experience disorientation if screen latency lags real time to a certain extent.

Many commercial aircraft use a taxi and takeoff/landing camera system, such as Boeing's Ground Maneuvering Camera System (GMCS) to view areas of the aircraft not visible from the cockpit (e.g., landing gear, under-wing area, etc.). Images are displayed on a cockpit display for pilot visualization. In bright light (e.g., midday) scenes, image details can be obscured in shadowed areas such as under the aircraft wing. An existing method for increasing image dynamic range in such scenes includes applying post-processing algorithms. These can be computationally expensive and either require large amounts of processing power or long calculation times, thus increasing system latency beyond an acceptable amount.

### SUMMARY

A method of enhancing a portion of an aircraft digital video image in real time includes the steps of identifying a target area within a field of view of a camera, the target area including at least a portion of an aircraft structure and a shadowed region, and selecting for enhancement a predetermined pixel subset corresponding to the target area. The method further includes capturing an image using the camera, the image represented by a signal, providing the signal to a video processing box, formatting the image within the video processing box, and applying, using a processing device, a contrast enhancement algorithm to the predetermined pixel subset to create and enhanced image.

An aircraft camera system includes at least one camera configured to capture an image, means for enhancing contrast within a predetermined pixel subset of the image to generate an enhanced image, and a video display for displaying the enhanced image.

### BRIEF DESCRIPTION OF THE DRAWINGS

FIG. 1 is a block diagram of select components of an aircraft camera system.
FIG. 2 is a simplified image including a shadowed region captured by the system of FIG. 1
FIG. 3 is a flow diagram illustrating selected steps of an image enhancement method that can be applied to the image of FIG. 2 to enhance contrast within a target area of the shadowed region.
FIG. 4 is the image of FIG. 2 after application of the image enhancement method of FIG. 3.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention as defined by the claims. The figures may not be drawn to scale, and applications and embodiments of the present invention may include features and components not specifically shown in the drawings.

### DETAILED DESCRIPTION

A digital video image enhancement method includes capturing an image with a camera and applying a contrast enhancement algorithm to a subset of the image during image processing to increase contrast and dynamic range of the subset. This subset can represent an image area known to be obscured during certain lighting conditions, and can therefore be identified and selected during camera installation. The enhanced image is provided to a video display for improved visualization of objects within the otherwise obscured image area.

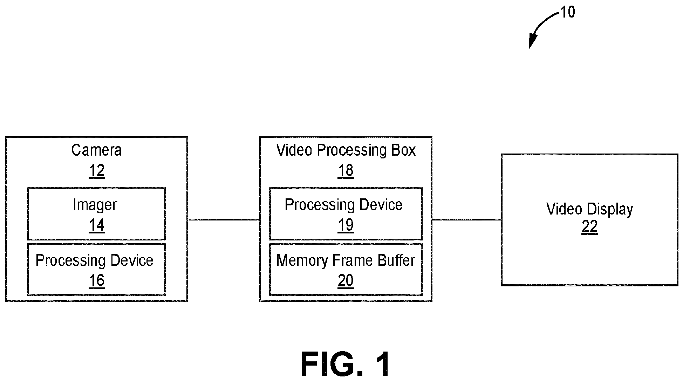

FIG. 1 is a schematic block diagram of camera system 10. As shown, camera system 10 includes camera 12 with imager 14 and processing device 16, video processing box 18 with processing device 19 and memory frame buffer 20, and video display 22.

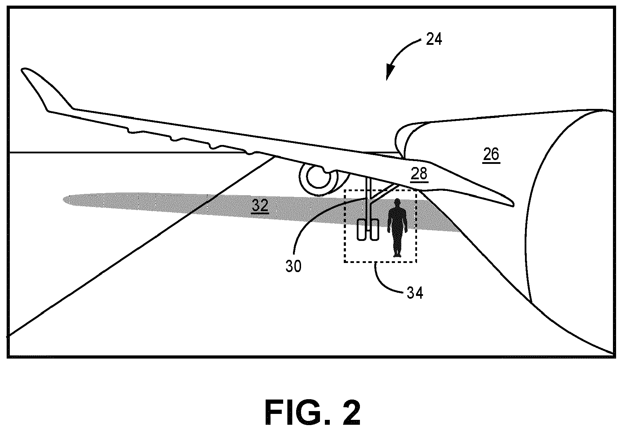

In an exemplary embodiment, system 10 is a video camera system for capturing external images of an aircraft (shown and labeled in FIG. 2). In such an embodiment, system 10 can include more than one camera 12 (e.g., three or more) depending on the size of the aircraft. Cameras 12 can be mounted, for example, on an underside of the aircraft to capture the nose landing gear, and/or on the rear of the aircraft (e.g., the vertical tail or horizontal stabilizer) to capture views of the wings and main landing gear. Other aircraft structures such as engines and cargo doors can also be monitored by a camera 12. Each camera 12 can be fixed in its positioning, such that it is always pointed at a particular aircraft structure. Each camera 12 can further be a color camera and include a fisheye or other wide-angle lens suitable for capturing an extremely wide angle of view.

The following description is best understood by simultaneous reference to FIGS. 1, 2, and 3. FIG. 2 represents an image of aircraft 24 captured by a rear-mounted camera 12. The image generally includes a portion of fuselage 26, wing 28, and landing gear 30. Due to the lighting conditions, the ground and area underneath wing 28 is obscured by shadowed region 32, which can make it difficult to see the condition of the landing gear (e.g., a blown tire), or an object or crew member positioned beneath wing 28. It should be understood that shadowed region 32 can generally refer to any obscured region, whether caused by a shadow (i.e., a dark area caused by an opaque object between a light source and a surface) or other low lighting conditions. An obscured and/or low-contrast target area 34 at least partially within shadowed region 32 can be enhanced, as is discussed in greater detail below.

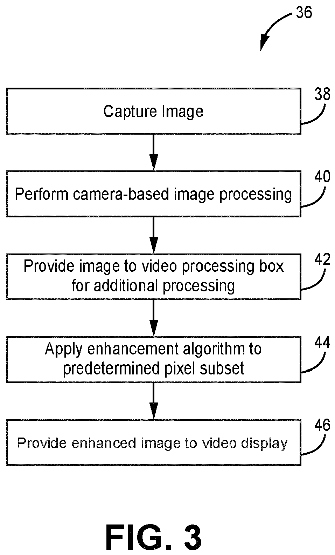

FIG. 3 is a flow diagram illustrating selected steps of image enhancement method 36. At step 38, camera 12 captures an image. Imager 14 is a pixel array sensor for converting captured light into an electrical signal. In an exemplary embodiment, imager 14 can be a complementary metal oxide semiconductor (CMOS) sensor, but can be, for example, a charge-coupled device (CCD) in an alternative embodiment. At step 40, various image processing steps can be performed by the components of camera 12. These can include clean-up of the electrical (first) signal and image dewarping to convert the wide-angle view to a corrected perspective view suitable for viewing on video display 22. Step 40 further includes conversion of the electrical signal to a second signal (if required by system 10) by processing device 16. In an exemplary embodiment, processing device 16 is a field programmable gate array (FPGA) but can be an application specific integrated circuit (ASIC) or a microprocessor in an alternative embodiment. Also in an exemplary embodiment, the second signal can be an optical signal intended for transmission via fiber optic cable. In an alternative embodiment, the electrical signal can be converted into an electromagnetic wave for wireless transmission. In yet another alternative embodiment, the electrical signal may not require conversion, for example, if using copper cable as a signal transmission means. As such, the "second signal" as used herein can refer generally to the signal as configured (converted or non-converted) for transfer to video processing box 18. Other signal transmission means are contemplated herein.

At step 42, the second signal is provided to video processing box 18 for additional image processing. Such processing can include cropping and scaling (up or down) of the image (e.g., from 1600 x 900 pixels) which can be performed within video processing box 18, as well as the creation of a composite image from multiple image streams in a multi-camera system. It is not necessary to create a composite image for a single-camera system. Memory frame buffer 20 can store individual video frames while processing occurs. The cropped/scaled image size can be determined and selected during a camera installation and system calibration step (not shown). For example, during installation, a technician can select, while at the video processing box, the scaled/cropped region to be displayed at video display 22. Such selection can be based on desired objects for viewing (e.g., landing gear, a particular portion of a wing, etc.), as well as system resolution requirements or limitations.

At step 44, an enhancement algorithm is applied to a predetermined pixel subset (e.g., 200 x 200 pixels) of the image, which is also identified and selected during the installation and calibration step discussed above. More specifically, a subset of pixels within the cropped/scaled image can be identified to include a commonly shadowed and/or obscured region proximate an aircraft structure (i.e., corresponding to target area 34) during certain lighting conditions. The particular size of the predetermined subset can generally be any subset of the image (cropped or uncropped) and can be selected based on factors such as the desired area for viewing in greater detail and/or system capabilities. It should be noted that the selection of the cropped region and/or the pixel subset can also be performed during maintenance, or as otherwise desired to change/improve what the pilot sees on video display 22.

The enhancement algorithm can be, for example, a histogram equalization algorithm that adjusts (e.g., flattens or linearizes) image intensities over a range (e.g., from 0 to 255 for an 8-bit grayscale image) to enhance/increase contrast such that objects within the subset are more easily distinguishable from one another. Other image processing algorithms that redistribute pixel intensity distribution are contemplated herein. The enhancement algorithm can be executed by processing device 19 which, like processing device 16, is an FPGA in an exemplary embodiment. FPGAs are well-suited for performing such forms of image processing in real-time with low latency due to the large amount of parallel processing hardware. In an alternative embodiment, device 19 can be one or a combination of another type of processing device (e.g., microprocessor, state machine, controller, etc.), and/or programmable logic device associated with video processing box 18, or located elsewhere within system 10 and/or aircraft 24.

In a multi-camera system, step 44 can occur as the composite image is being pulled from memory and before its output to video display 22. In an alternative embodiment, step 44 can occur prior to or simultaneously with other image processing done during step 44. At step 46 the enhanced image is provided to video display 22, which can be located in a cockpit (not shown) of aircraft 24.

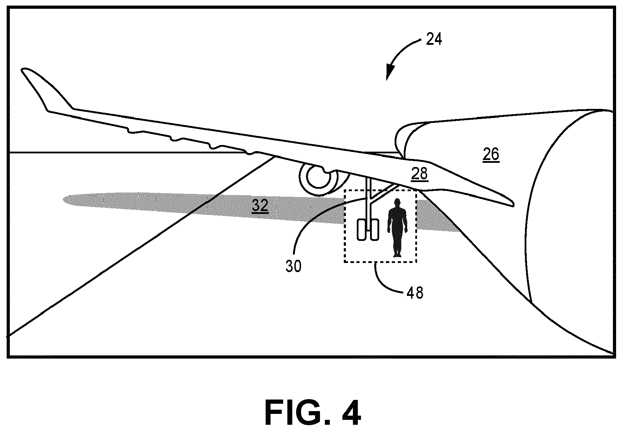

FIG. 4 represents an image having been enhanced using method 36. More specifically, the image of FIG. 4 includes enhanced area 48 beneath wing 28. Enhanced area 48 corresponds to target area 34 of FIG. 2 and the predetermined pixel subset targeted in step 44 by the enhancement algorithm. Enhanced area 48 has improved contrast over the same region (i.e., target area) of the captured image, allowing the pilot to better visualize details in the area. Specifically in this example, a crew member and landing gear 30 better stand out from shadowed region 32.

Method 36 can include additional/optional steps not listed in FIG. 3. For example, in an alternative embodiment, it can be desirable to perform a block blending process to better blend the periphery of enhanced area 48 into the surrounding image. Such a step can be implemented between steps 44 and 46 of FIG. 3. In another alternative embodiment, method 36 can include processing at a second video processing box between steps 44 and 46. Other intervening processing steps are contemplated herein.

Further alternative embodiments of system 10 and/or method 36 are possible. For example, the predetermined pixel subset can be selected and input at camera 12, rather than at video processing box 18. In yet another embodiment, either camera 12 or video processing box 18 can include object detection capabilities to automatically detect and select obscured regions for contrast enhancement.

Enhancing only a subset of an image provides the desired amount of detail in critical areas with minimal additional hardware and processing power, as well as minimal impact on latency. Improving the detail in otherwise obscured regions of an image can lead to increased pilot confidence and increased safety of passengers and crew. Although discussed primarily in the context of commercial aviation, the disclosed method can be used in other types of vehicle-based camera systems and surveillance systems.

### Discussion of Possible Embodiments

The following are non-exclusive descriptions of possible embodiments of the present invention.

A method of enhancing a portion of an aircraft digital video image in real time includes the steps of identifying a target area within a field of view of a camera, the target area including at least a portion of an aircraft structure and a shadowed region, and selecting for enhancement a predetermined pixel subset corresponding to the target area. The method further includes capturing an image using the camera, the image represented by a signal, providing the signal to a video processing box, formatting the image within the video processing box, and applying, using a processing device, a contrast enhancement algorithm to the predetermined pixel subset to create and enhanced image.

The method of the preceding paragraph can optionally include, additionally and/or alternatively, any one or more of the following features, configurations and/or additional components:

In the above method, the portion of the aircraft structure is at least partially obscured by the shadowed region.

In any of the above methods, the aircraft structure can be a wing, an engine, a door, or landing gear.

In any of the above methods, the signal can be an electrical signal.

In any of the above methods, the signal can include a first signal and a second signal, the first signal, as captured by the camera can be an electrical signal, and the second signal, as provided to the video processing box, can be an optical or electromagnetic signal.

In any of the above methods, the target area is identified and the predetermined pixel subset is selected and input at the video processing box during a camera calibration process.

In any of the above methods, formatting the image within the video processing box can include at least one of a scaling or cropping step.

Any of the above methods can further include generating a composite image from the image and at least one additional image captured by a separate camera.

In any of the above methods, the processing device can be located within the video processing box, and the processing device can be a field programmable gate array.

In any of the above methods, the contrast enhancement algorithm can be a histogram equalization algorithm.

In any of the above methods, the enhanced image can include an enhanced area corresponding to the predetermined pixel subset and the target area of the image, and a contrast of the enhanced area can be greater than a contrast of the target area of the image as captured by the camera.

Any of the above methods can further include blending a periphery of the of the enhanced region into adjacent portions of the enhanced image.

Any of the above methods can further include providing the enhanced image to a video display.

An aircraft camera system includes at least one camera configured to capture an image, means for enhancing contrast within a predetermined pixel subset of the image to generate an enhanced image, and a video display for displaying the enhanced image.

The system of the preceding paragraph can optionally include, additionally and/or alternatively, any one or more of the following features, configurations and/or additional components:

The above system can further include a video processing box configured to format the image. The video processing box can include a processing device and a memory frame buffer.

In any of the above systems, the predetermined pixel subset can be selected and input at the video processing box during a calibration process of the at least one camera.

In any of the above systems, the at least one camera can include a plurality of cameras.

In any of the above systems, the predetermined pixel subset can correspond to a target area of the image including at least a portion of an aircraft structure and a shadowed region.

In any of the above systems, the means for enhancing contrast within the predetermined pixel subset can include a histogram equalization algorithm.

In any of the above systems, the histogram equalization algorithm can be carried out by a processing device within the video processing box, and the processing device can be a field programmable gate array.

While the invention has been described with reference to an exemplary embodiment(s), it will be understood by those skilled in the art that various changes may be made without departing from the scope of the invention as defined by the claims. In addition, many modifications may be made to adapt a particular situation or material to the teachings of the invention without departing from the scope of the claims. Therefore, it is intended that the invention not be limited to the particular embodiment(s) disclosed, but that the invention will include all embodiments falling within the scope of the appended claims.

## Claims

1. A method of enhancing a portion of an aircraft digital video image in real time, the method comprising:
identifying a target area within a field of view of a camera (12), the target area including a least a portion of an aircraft structure and a shadowed region;
selecting for enhancement a predetermined pixel subset corresponding to the target area;
capturing an image using the camera, the image represented by a signal;
providing the signal to a video processing box (18);
formatting the image within the video processing box; and
applying, using a processing device, a contrast enhancement algorithm to the predetermined pixel subset to create an enhanced image.

2. The method of claim 1, wherein the portion of the aircraft structure is at least partially obscured by the shadowed region.

3. The method of claim 1 or 2, wherein the aircraft structure is a wing, an engine, a door, or landing gear.

4. The method of claim 1, 2 or 3, wherein the signal is an electrical signal.

5. The method of any preceding claim, wherein the signal comprises a first signal and a second signal; wherein the first signal, as captured by the camera, is an electrical signal; and wherein the second signal, as provided to the video processing box, is an optical or electromagnetic signal.

6. The method of any preceding claim, wherein the target area is identified, and the predetermined pixel subset is selected and input at the video processing box during a camera calibration process, and/or wherein formatting the image within the video processing box comprises at least one of a scaling or cropping step.

7. The method of any preceding claim and further comprising:
generating a composite image from the image and at least one additional image captured by a separate camera.

8. The method of any preceding claim, wherein the processing device is located within the video processing box, and wherein the processing device is a field programmable gate array; and/or wherein the contrast enhancement algorithm is a histogram equalization algorithm.

9. The method of any preceding claim, wherein the enhanced image comprises an enhanced area corresponding to the predetermined pixel subset and the target area of the image, and wherein a contrast of the enhanced area is greater than a contrast of the target area of the image as captured by the camera, and optionally further comprising:
blending a periphery of the of the enhanced region into adjacent portions of the enhanced image.

10. The method of any preceding claim and further comprising:
providing the enhanced image to a video display.

11. An aircraft camera system comprising:
at least one camera (12) configured to capture an image;
means (14) for enhancing contrast within a predetermined pixel subset of the image to generate an enhanced image; and
a video display (22) for displaying the enhanced image.

12. The system of claim 11 and further comprising:
a video processing box (18) configured to format the image;
wherein the video processing box includes a processing device and a memory frame buffer.

13. The system of claim 11 or 12, wherein the predetermined pixel subset is selected and input at the video processing box during a calibration process of the at least one camera.

14. The system of claim 11, 12 or 13, wherein the predetermined pixel subset corresponds to a target area of the image including at least a portion of an aircraft structure and a shadowed region.

15. The system of any of claims 11 to 14, wherein the means for enhancing contrast within the predetermined pixel subset comprises a histogram equalization algorithm, and optionally wherein the histogram equalization algorithm is carried out by a processing device (19) within the video processing box, and wherein the processing device is a field programmable gate array.
